# EUROPÄISCHE PATENTSCHRIFT

(11) **EP 1 332 926 B1**
(45) Veröffentlichungstag und Bekanntmachung des Hinweises auf die Patenterteilung: **20.05.2009**
(21) Anmeldenummer: 02027049.2
(22) Anmeldetag: 03.12.2002
(51) Int. Cl.: B60R 16/02, H04L 12/24, H04L 12/413, B60R 25/00

(54) **Elektronisches Steuergerät für ein Kraftfahrzeug oder ein Fahrzeug-Antriebsaggregat**
Electronic control device for a vehicle or a vehicle actuator
Dispositif de commande pour un véhicule ou un actionneur

(30) Priorität: 29.01.2002 DE 10203341
(43) Veröffentlichungstag der Anmeldung: 06.08.2003
(73) Patentinhaber: Bayerische Motoren Werke Aktiengesellschaft, 80809 München (DE)
(72) Erfinder: Lauer, Manfred, 85229 Ainhofen (DE); Santl, Helmut, 81371 München (DE)

(56) Entgegenhaltungen:
- EP-A- 0 555 532
- DE-A1- 4 305 507
- DE-A1- 4 420 425
- US-A1- 2002 035 428

## Beschreibung

Die Erfindung betrifft ein elektronisches Steuergerät für ein Kraftfahrzeug oder ein Fahrzeug-Antriebsaggregat, das über mit Steckern versehene Kabel mit mehreren elektrischen oder elektronischen Bauelementen verbunden ist. Derartige elektronische Steuergeräte können die unterschiedlichsten Aktoren oder dgl. ansteuern bzw. Signale von unterschiedlichsten Sensoren empfangen, was beides unter den allgemeinen Begriff des "Bauelementes" fallen soll. Ein solches Steuergerät ist aus der DE 100 30 987 A gemäß Oberbegriff des Anspruchs 1 bekannt. Wenn das Steuergerät für ein bspw. als Hubkolben-Brennkraftmaschine ausgebildetes Fahrzeug-Antriebsaggregat vorgesehen ist und deren elektronische Steuerung übernimmt, so kann es sich bei den Bauelementen bspw. um die Kraftstoff-Einspritzventile der einzelnen Brennkraftmaschinen-Zylinder handeln oder um Verstellmotoren, die verschiedenen Nockenwellen der Brennkraftmaschine zugeordnet sind, oder um vieles mehr. Handelt es sich um ein allgemein dem Kfz zugeordnetes Steuergerät, so kann dieses unterschiedlichste Funktionen im Kraftfahrzeug vornehmen, so dass auch hierbei die unterschiedlichsten Bauelemente in Frage kommen, wie bspw. Verstellmotoren, Fahrwerk-Steuerventile und vieles mehr.

Im Fahrzeugbau und in der Fahrzeug-Ausrüstung und insbesondere bei der Produktion von PKWs gilt es, in möglichst einfachen Arbeitsabläufen möglichst rationell, schnell und dennoch fehlerfrei einen Zusammenbau der einzelnen Bestandteile umsetzen zu können. Im Rahmen dieses Zusammenbaus oder dieser Montage müssen auch elektronische Steuergeräte mit den zugehörigen Bauelementen verbunden werden, und zwar über geeignet vorgesehene bzw. geeignet verlegte Kabel, an deren Enden Stecker vorgesehen sind, die entweder direkt an das Steuergerät bzw. an das jeweilige Bauelement angesteckt oder mit einem weiteren Kabel, das letztlich zum Steuergerät bzw. Bauelement führt, verbunden werden.

Um sicherzustellen, dass bei elektronischen Steuergeräten die Steckverbinder bzw. Stecker mit den richtigen Sensoren bzw. Aktoren, d.h. allgemein mit den richtigen elektrischen oder elektronischen Bauelementen verbunden werden, wird bei gleichen oder gleichartigen Bauelementen üblicherweise eine sog. Steckercodierung verwendet. Hierzu sind die Stecker der unterschiedlichen Bauelement-Typen, also bspw. zweier nebeneinander angeordneter Stellmotoren, unterschiedlich geformt, so dass jeweils nur dasjenige Kabel mit dem jeweils zugehörig geformten Stecker an diesen Bauelement-Typ angeschlossen werden kann. Vereinfacht ausgedrückt sei eines der einander benachbarten, insbesondere gleichartigen Bauelemente mit einer Aufnahme oder Buchse für einen im Querschnitt runden Stecker und das andere Bauelement mit einer Buchse für einen rechteckigen Stecker versehen. Damit ist sichergestellt, dass nur eine einzige und folglich exakte Steckverbindung zwischen den zugehörigen zum elektronischen Steuergerät führenden Kabeln und den jeweiligen Bauelementen hergestellt werden kann. Ein wesentlicher Nachteil dieser Maßnahme liegt darin, dass eine Vielzahl unterschiedlicher Bauelemente, die sich praktisch nur in der elektrischen Anschlussbuchse oder dgl. unterscheiden, vorgehalten werden muss.

Eine weitere Möglichkeit, die Erfüllung der o.g. Anforderung auch in einer Massenproduktion zumindest im wesentlichen sicherzustellen besteht darin, die räumliche Anordnung der Kabel und der Bauelemente in Relation zueinander derart zu gestalten, dass eine Verwechslung der zugehörigen Anschluss-Kabel ausgeschlossen ist. Dann können im Gegensatz zu der im vorhergehenden Absatz beschriebenen Möglichkeit bei Bedarf an gleichartigen Bauelementen auch völlig gleichartige Bauelemente, nämlich auch hinsichtlich der Buchsen- bzw. Steckergestaltung vorgesehen sein. Jedoch dürfen diese gleichen Bauelemente dann nicht in unmittelbarer Nachbarschaft verbaut sein. Aber selbst dann ist es bei unsachgemäßer Verlegung der elektrischen Kabel weiterhin möglich, ein falsches Kabel mit dem falschen Bauelement zu verbinden.

Da auch die erstgenannte Möglichkeit der Steckercodierung nicht absolut fehlerfrei ist, nämlich wenn das falsche Bauelement an der falschen Stelle verbaut wird, wonach das gesamte System fehlerhaft arbeitet, obwohl eine richtige Steckverbindung hergestellt wurde, ist es Aufgabe der vorliegenden Erfindung, eine Abhilfemaßnahme für die geschilderte Problematik aufzuzeigen. Es soll also sichergestellt werden, dass nur das richtige Bauelement an der zugehörigen Stelle montiert und mit dem richtigen Kabel, welches die Verbindung mit einem elektronischen Steuergerät herstellt, verbunden werden kann. Andernfalls möge das elektronische Steuergerät eine geeignete Fehlermeldung abgeben.

Zur Lösung dieser Aufgabe wird ein elektronisches Steuergerät für ein Kraftfahrzeug oder ein Fahrzeug-Antriebsaggregat vorgeschlagen, das über mit Steckern versehene Kabel mit mehreren elektrischen oder elektronischen Bauelementen verbunden ist und wobei nach einem erstmaligen Verbinden eines Steckers mit einem konkreten Bauelement eine Lernfunktion abläuft, anhand derer im Steuergerät erkannt und abgelegt wird, welcher konkrete Typ von verschiedenen möglichen Bauelementen am jeweiligen Stecker angeschlossen ist. Ist dabei keine erfolgreiche Zuordnung möglich, so kann das elektronische Steuergerät eine Fehlermeldung abgeben.

Wenn die Möglichkeit besteht, dass die Anschlusskabel von gleichartigen Bauelementen (eine einzelnes konkretes Bauelement wird als Typ dieses Bauelements bezeichnet) verwechselt werden können, so kann durch Einsatz einer Lernfunktion im elektronischen Steuergerät erkannt werden, welche Funktion an einem bestimmten Ausgang des elektronischen Steuergeräts liegt. Das Steuergerät veranlasst also nach erfolgter Montage, also nachdem die Verbindung zu diversen Bauelementen hergestellt wurde, beispielsweise eine Aktion des angesteckten Bauelements und überwacht diese Aktion und kann dann anhand der Analyse des Überwachungsergebnisses feststellen, um welches konkrete Bauelement bzw. welchen Typ von Bauelement es sich handelt.

Beispielsweise können zwei gleichartige Stellmotoren oder dgl. zeitlich nacheinander angesteuert werden, deren Aktionen jedoch zu unterschiedlichen Resultaten führen. Wird als Resultat der Ansteuerung des ersten Bauelements eine Aktion des ersten Typs der beiden möglichen Bauelemente festgestellt, so kann darauf geschlossen werden, dass am zuvor aktivierten Steuergeräte-Ausgang und zugehörigem Kabel der erste Bauelemente-Typ angeschlossen ist. Danach kann der gleiche Test am zweiten Steuergeräte-Ausgang für das dort angeschlossene (und demzufolge dort zu erwartenden zweiten Typ von) Bauelement durchgeführt werden.

Es kann aber nicht nur - wie soeben geschildert wurde - im Rahmen der Lernfunktion das jeweilige an einen Steuergeräte-Ausgang angeschlossene Bauelement aktiviert und anhand der Signale eines diese Aktivität registrierenden Sensors auf den konkreten Typ dieses Bauelementes geschlossen werden, sondern es kann alternativ bzw. umgekehrt auch festgestellt werden, ob ein und wenn ja welcher Sensor von verschiedenen möglichen Sensortypen an einem bestimmten Ausgang bzw. Eingang des Steuergeräts angeschlossen ist. Grundsätzlich können dabei bevorzugt nacheinander die verschiedenen Ausgangsleitungen oder Schnittstellen des elektronischen Steuergeräts aktiviert werden, woraufhin an den jeweiligen Reaktionen festgestellt wird, welches Bauelement an der jeweiligen Schnittstelle angeschlossen ist.

Ein erfindungsgemäßes Steuergerät erlaubt somit eine deutliche Reduktion des logistischen Aufwands, da ein Einsatz gleichartiger Bauelemente ermöglicht wird, ohne dass es auf die Exaktheit der Kabel-Verbindungen zwischen diesen Bauelementen und dem zugehörigen elektronischen Steuergerät ankommt. Das elektronische Steuergerät nimmt selbst die jeweilige Zuordnung vor. Auch entfällt der Aufwand zur Sicherstellung des räumlich richtigen Anbringens der Bauteile und es kann die Kabelverlegung einfacher gestaltet werden. Die beschriebene Lernfunktion muss lediglich bei Erst-Inbetriebnahme des gesamten Systems einmalig durchlaufen werden, wonach die Ergebnisse in einem Speicher des Steuergeräts abgelegt werden können. Zu einem späteren Zeitpunkt kann diese Lernfunktion neuerlich aktiviert werden, insbesondere wenn ein Fehler erkannt wurde. Dadurch wird eine Werkstattaktivität gegebenenfalls abgedeckt oder ein Fehler abgespeichert, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Elektronisches Steuergerät für ein Kraftfahrzeug oder ein Fahrzeug-Antriebsaggregat, das über mit Steckern versehene Kabel mit mehreren elektrischen oder elektronischen Bauelementen verbunden ist und wobei nach einem erstmaligen Verbinden eines Steckers mit einem konkreten Bauelement eine Lernfunktion abläuft, anhand derer im Steuergerät erkannt und abgelegt wird, welcher konkrete Typ von verschiedenen möglichen Bauelementen am jeweiligen Stecker angeschlossen ist, **gekennzeichnet dadurch dass** im Rahmen der Lernfunktion das jeweilige Bauelement aktiviert und anhand der Signale eines diese Aktivität registrierenden Sensors auf den konkreten Typ dieses Bauelementes geschlossen wird.

## Claims

1. An electronic control device for a motor vehicle or a motor vehicle drive unit, which is connected by means of cables provided with plugs to a plurality of electrical or electronic components, and wherein, after a first connection of a plug to a specific component, a learning function is run, with the aid of which the control device recognises and stores which specific type of various possible components is connected to the respective plug, **characterised in that,** in the course of the learning function, the respective component is activated and, using the signals of a sensor recording this activity, a conclusion is made about the specific type of this component.

## Revendications

1. Appareil de commande électronique pour un véhicule automobile ou une unité d'entraînement d'un véhicule automobile relié par des connecteurs munis de câbles à plusieurs composants électriques ou électroniques et, après un branchement d'un connecteur avec un composant particulier, une fonction d'apprentissage s'exécute pour reconnaître et enregistrer, dans l'appareil de commande, le type particulier parmi les différents composants possibles, qui a été relié à ce connecteur,
**caractérisé en ce que**
dans le cadre de la fonction d'apprentissage, on active le composant particulier et, à l'aide des signaux d'un capteur enregistrant cette activité, on conclut au type particulier correspondant à ce composant
